# FASCICULE DE BREVET EUROPEEN

(11) **EP 4 305 280 B1**
(45) Date de publication et mention de la délivrance du brevet: **26.08.2026**
(21) Numéro de dépôt: 22712963.2
(22) Date de dépôt: 04.03.2022
(51) Int. Cl.: F01D 11/00

(54) **ENSEMBLE STATORIQUE DE TURBINE**
TURBINENSTATORANORDNUNG
TURBINE STATOR ASSEMBLY

(30) Priorité: 12.03.2021 FR 2102464
(43) Date de publication de la demande: 17.01.2024
(73) Titulaire: SAFRAN AIRCRAFT ENGINES, 75015 Paris (FR)
(72) Inventeur: DANTENY, Ulysse Jacques Bernard, 77550 MOISSY-CRAMAYEL (FR); BEAUBOIT, Kenny, 77550 MOISSY-CRAMAYEL (FR)
(74) Mandataire: Gevers & Orès
(86) Numéro de dépôt international: PCT/FR2022/050387
(87) Numéro de publication internationale: WO 2022/189735

(56) Documents cités:
- EP-A1- 2 594 743
- DE-A1- 102012 014 109
- FR-A1- 2 999 641
- FR-A1- 3 039 589
- FR-A1- 3 082 233
- US-A1- 2018 347 384

## Description

### Domaine technique de l'invention

La présente invention concerne le domaine des turbomachines d'aéronef et en particulier un ensemble statorique de turbine pour une turbomachine d'aéronef.

### Arrière-plan technique

L'arrière-plan technique comprend notamment les documents US-A1-2018/0347384, FR-A1-3 082 233 et FR-A1-3 039 589.

Une turbine de turbomachine conventionnelle comprend un ou plusieurs étages axiaux disposés en série qui permettent de convertir de l'énergie de combustion en énergie motrice, afin notamment d'entraîner un rotor de compresseur(s) et un arbre de soufflante.

Pour ce faire, chaque étage de la turbine comprend un distributeur formant un stator et une roue mobile formant un rotor. Le distributeur comprend des aubes fixes configurées pour accélérer et dévier un écoulement de gaz de combustion en direction d'aubes mobiles portées par un disque de la roue mobile.

Il est connu de disposer un joint d'étanchéité radialement à l'intérieur du distributeur afin de réduire la circulation des gaz en-dehors de la veine annulaire primaire dans lequel s'étendent les aubes fixes et mobiles. Un tel joint comprend un élément abradable solidaire du distributeur et une ou plusieurs léchettes annulaires solidaires du rotor.

Lors du fonctionnement de la turbomachine, le distributeur est exposé à des températures plus élevées que le disque de la roue mobile et l'inertie thermique du distributeur est généralement plus faible que celle du disque, ce qui entraîne une variation du jeu entre l'élément abradable et les léchettes. La mise en rotation du rotor entraine également sa déformation, ce qui conduit à des variations de jeu rotor/stator d'origine mécanique, variables suivant le régime moteur (fermeture de jeu durant les accélérations, ouverture de jeu pendant les décélérations).

Il en résulte une augmentation du débit de fuite à travers le joint d'étanchéité lorsque le jeu précité augmente et une accélération de l'usure de l'élément abradable lorsque ce jeu diminue.

Le document FR-A1-3 027 343 divulgue une solution de montage autorisant un déplacement radial entre l'élément abradable et le distributeur. Pour autoriser ce type de déplacement, un certain jeu de montage est prévu entre l'élément abradable et le distributeur. De plus, le document US 2018/347384 A1 divulgue un système d'étanchéité comprenant les caractéristiques techniques du préambule de la revendication 1.

En fonctionnement, une partie des gaz chauds issus de la veine et qui est destinée à circuler jusqu'au joint d'étanchéité pénètre dans ce jeu de montage. Des gaz chauds circulent donc d'amont en aval à travers le jeu de montage entre l'élément abradable et le distributeur avant d'être réinjectés dans la veine. Ces gaz chauds ont tendance à augmenter la température de l'élément abradable et du distributeur, ce qui peut altérer le fonctionnement du joint d'étanchéité et donc impacter les performances de la turbomachine, mais aussi affecter la durée de vie de ces pièces. En pratique, une augmentation de la température de l'élément abradable (et de l'anneau d'étanchéité qui supporte cet élément abradable) conduit à une ouverture de jeu non souhaitée par un effet de dilatation thermique.

L'invention a pour but d'apporter une solution à ce problème d'échauffement tout en conservant le défaut d'étanchéité entre l'élément abradable et le distributeur, qui est inhérent à la présence du jeu de montage entre ces pièces.

### Résumé de l'invention

L'invention concerne un ensemble statorique pour une turbomachine d'aéronef s'étendant autour d'un axe et comprenant :
- un anneau d'étanchéité s'étendant autour de l'axe et comprenant un élément abradable destiné à coopérer avec des léchettes d'étanchéité portées par un rotor monté autour de l'axe,
- une pluralité de secteurs de couronne disposés circonférentiellement bout à bout autour de l'axe de sorte à former ensemble une couronne, chaque secteur de couronne étant aubagé,
- des moyens de coulissement permettant un déplacement relatif radialement vis-à-vis de l'axe entre l'anneau d'étanchéité et chacun des secteurs de couronne, les moyens de coulissement comportant :
   + selon une première configuration, deux brides annulaires radialement externes, respectivement amont et aval, de l'anneau d'étanchéité, et une bride radialement interne de chacun des secteurs de couronne qui est intercalée axialement entre les deux brides annulairs radialement externes, ou
   + selon une seconde configuration, deux brides annulaires radialement internes, respectivement amont et aval, de chacun des secteurs de couronne, et une bride radialement externe de l'anneau d'étanchéité qui est intercalée axialement entre les deux brides annulaires radialement internes, caractérisé en ce que chacun des secteurs de couronne comporte un déflecteur qui est porté, selon la première configuration, par la bride radialement interne de ce secteur et qui s'étend autour de la bride annulaire amont de l'anneau d'étanchéité, et selon la seconde configuration, par la bride amont.

Dans la présente demande, on entend par « déflecteur », un organe de guidage de gaz. Lorsqu'un flux de gaz rencontre un déflecteur, ce flux contourne ce déflecteur qui modifie donc sa trajectoire d'écoulement.

Dans la présente invention, le déflecteur permet de modifier l'écoulement du flux de gaz qui provient de la veine et s'écoule radialement vers l'intérieur en amont des secteurs de couronne, pour rejoindre le joint d'étanchéité dont fait partie l'anneau d'étanchéité. Ce flux de gaz s'écoule radialement vers l'intérieur le long de la bride interne de chacun des secteurs de couronne et rencontre le déflecteur sur son passage. Le flux de gaz est alors guidé par le déflecteur vers l'amont ce qui permet le mélange de ce flux avec l'air de refroidissement du rotor. Ce mélange entraine une diminution significative de la température de l'air circulant dans le jeu de montage précité entre l'anneau d'étanchéité et les secteurs de couronne. La température de l'anneau d'étanchéité est diminuée, ce qui permet la fermeture du jeu rotor/stator (par un effet de dilatation thermique) et donc l'amélioration de la performance de la turbine.

L'ensemble statorique selon l'invention peut comprendre une ou plusieurs des caractéristiques suivantes, prises isolément les unes des autres, ou en combinaison les unes avec les autres :
- le déflecteur, dans la première configuration, est fixé sur une face radiale amont de la bride radialement interne de chacun des secteurs de couronne,
- le déflecteur, dans la première configuration, est fixé sur la bride radialement interne de chacun des secteurs de couronne par soudage, brasage ou rivetage,
- le déflecteur, dans la première configuration, a en section axiale une forme générale en L dont une première branche est orientée radialement et s'étend parallèlement à la bride radialement interne de chacun des secteurs de couronne, et dont une seconde branche est orientée axialement vers l'amont et s'étend autour de la bride annulaire amont de l'anneau d'étanchéité et d'au moins une partie amont de cet anneau d'étanchéité,
- ladite seconde branche comprend une extrémité libre amont qui est située en amont de l'anneau d'étanchéité,
- le déflecteur est une première tôle,
- l'ensemble comprend une deuxième tôle qui forme un autre déflecteur et qui est portée, dans la première configuration, par la bride annulaire amont de l'anneau d'étanchéité, et/ou une troisième tôle qui forme un autre déflecteur et qui est portée par la bride annulaire aval de l'anneau d'étanchéité,
- les moyens de coulissement comportent en outre des pions portés par les brides annulaires amont et aval de l'anneau d'étanchéité et traversant des ouvertures oblongues formées dans la bride de chacun des secteurs de couronne,
- la bride radialement interne de chacun des secteurs de couronne a une dimension radiale supérieure à une dimension radiale maximale de l'anneau d'étanchéité,
- dans la première configuration, la bride radialement interne de chacun des secteurs de couronne est engagée entre les brides annulaires amont et aval de l'anneau d'étanchéité sur une distance radiale qui représente moins de 50% de la/une dimension radiale maximale des secteurs de couronne,
- dans la seconde cofiguration, la bride radialement externe de l'anneau d'étanchéité est engagée entre les brides annulaires amont et aval de chacun des secteurs de couronne sur une distance radiale qui représente moins de 50% de la/une dimension radiale maximale des secteurs de couronne,
- la bride annulaire amont de chacun des secteurs de couronne, dans la seconde configuration, porte ledit déflecteur à sa périphérie interne, et
- les moyens de coulissement comportent en outre des pions portés par les brides annulaires amont et aval de chacun des secteurs de couronne et traversant des ouvertures oblongues formées dans la bride de l'anneau d'étanchéité, ledit déflecteur étant situé radialement à l'intérieur de ces pions. La présente invention concerne encore une turbine pour une turbomachine d'aéronef, la turbine comprenant un carter et un ensemble statorique tel que décrit ci-dessus porté par le carter.

La turbine statorique selon l'invention peut comprendre une ou plusieurs des caractéristiques suivantes, prises isolément les unes des autres, ou en combinaison les unes avec les autres :
- la turbine comprend en outre un rotor pourvu de léchettes annulaires configurées pour coopérer avec l'élément abradable de l'ensemble statorique, ce rotor comportant une roue mobile située en amont des secteurs de couronne et comportant un disque portant des aubes,
- les aubes de la roue mobile comprennent des becquets aval qui s'étendent au moins en partie autour dudit déflecteur,
- le rotor comprend un premier passage d'air de ventilation qui a une orientation axiale et qui est défini par des jeux entre des pieds des aubes et le disque, et un second passage d'air de ventilation qui a une orientation radiale et qui est défini par des orifices radiaux formés en amont desdites léchettes, et
- les becquets aval s'étendent autour dudit déflecteur qui s'étend lui-même autour de l'autre déflecteur porté par la bride annulaire amont de l'anneau d'étanchéité.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'un ensemble propulsif d'aéronef,
[Fig.2] la figure 2 est une demi-vue schématique partielle en coupe axiale d'une turbine basse pression de turbomachine,
[Fig.3] la figure 3 est une vue schématique en perspective d'un secteur de distributeur de la turbine de la figure 2,
[Fig.4] la figure 4 est une vue schématique en perspective d'un tronçon d'anneau formant un support pour un élément abradable d'un joint d'étanchéité de la turbine de la figure 2,
[Fig.5] la figure 5 est une vue schématique en perspective d'un tronçon d'élément abradable annulaire dudit joint d'étanchéité de la turbine de la figure 2,
[Fig.6] la figure 6 est une vue schématique en perspective d'une partie de l'anneau de la figure 4, montrant des orifices de réception d'un pion,
[Fig.7] la figure 7 est une vue schématique en perspective d'un pion prévu pour assurer une coopération du secteur de couronne de la figure 3 avec l'anneau de la figure 4,
[Fig.8] la figure 8 est une vue schématique en perspective d'une partie de la turbine de la figure 2, et en particulier des moyens de déplacement radial entre l'anneau et un secteur de distributeur,
[Fig.9] la figure 9 est une demi-vue schématique partielle en coupe axiale d'une turbine basse pression et illustre la circulation de plusieurs flux de gaz,
[Fig.10] la figure 10 est une vue schématique en perspective d'un disque et d'une aube d'une roue de turbine,
[Fig.11] la figure 11 est une demi-vue schématique partielle en coupe axiale d'une turbine basse pression et illustre la circulation de plusieurs flux de gaz grâce à l'invention, et
[Fig.12] la figure 12 est une demi-vue schématique partielle en coupe axiale d'une turbine basse pression et montre une variante de réalisation de l'invention.

### Description détaillée de l'invention

Les figures comprennent un référentiel L, R et C définissant respectivement des directions axiale (ou longitudinale), radiale et circonférentielle orthogonales entre elles.

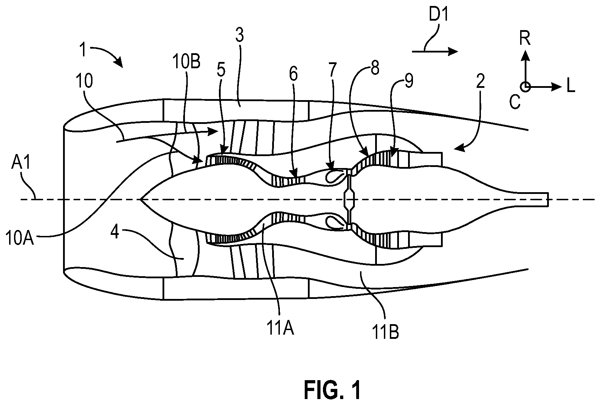

Il est représenté à la figure 1 un ensemble propulsif 1 d'aéronef comprenant une turbomachine 2 carénée par une nacelle 3. Dans cet exemple, la turbomachine 2 est une turbomachine du type turboréacteur à double corps et à double flux.

Par la suite, les termes « amont » et « aval » sont définis par rapport à un sens D1 d'écoulement des gaz à travers l'ensemble propulsif 1 lorsque celui-ci est propulsé.

La turbomachine 2 présente un axe central longitudinal A1 autour duquel s'étendent ses différents composants, en l'occurrence, de l'amont vers l'aval, une soufflante 4, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz.

Lors du fonctionnement de la turbomachine 2, un écoulement d'air 10 pénètre dans l'ensemble propulsif 1 par une entrée d'air en amont de la nacelle 3, traverse la soufflante 4 puis se divise en un flux primaire 10A central et un flux secondaire 10B.

Le flux primaire 10A s'écoule dans une veine principale 11A de circulation des gaz traversant le générateur de gaz. Le flux secondaire 10B s'écoule quant à lui dans une veine secondaire 11B entourant le générateur de gaz et délimitée radialement vers l'extérieur par la nacelle 3.

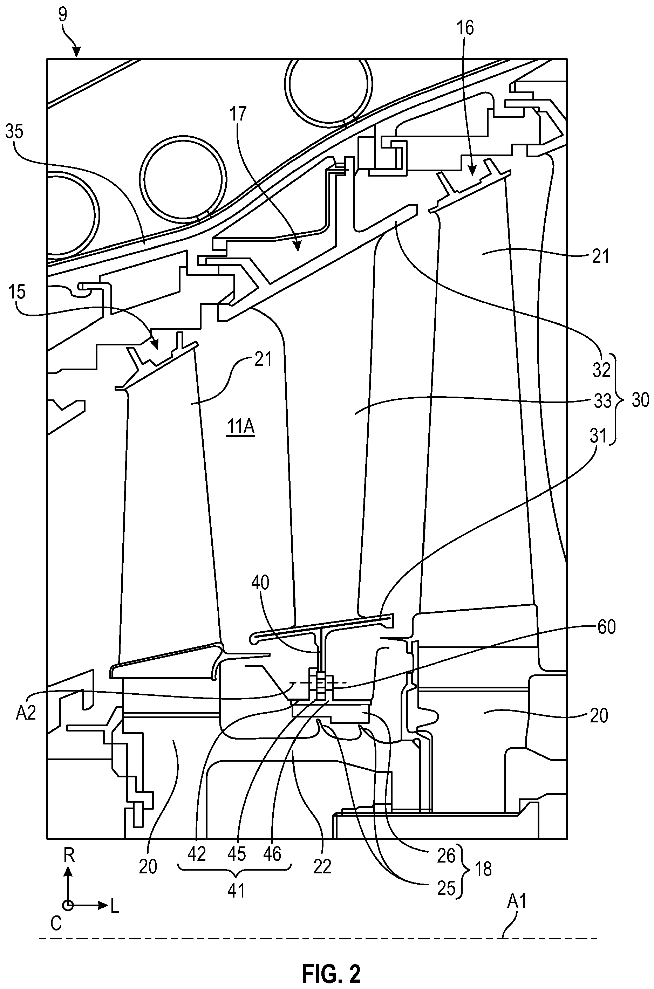

La turbine basse pression 9, partiellement représentée à la figure 2, est configurée pour récupérer une partie de l'énergie de combustion afin d'entraîner en rotation autour de l'axe A1 des roues mobiles formant le rotor de la turbine 9. Entre chaque paire de roues mobiles adjacentes, la turbine 9 comprend une couronne aubagée statorique formant un distributeur.

La figure 2 montre une partie de deux roues mobiles 15 et 16, d'un distributeur 17 et d'un joint d'étanchéité 18 de la turbine 9.

Le distributeur 17 s'étend axialement entre la roue mobile 15, qui forme une roue amont, et la roue mobile 16 qui forme une roue aval.

De manière connue en soi, chacune des roues mobiles 15 et 16 comprend un disque 20 et des aubes 21 portées par le disque 20.

Dans cet exemple, le disque 20 de la roue amont 15 comprend une virole 22 s'étendant axialement en direction de la roue aval 16, radialement à l'intérieur du distributeur 17. Une extrémité aval de la virole 22 est reliée au disque 20 de la roue aval 16 de manière à solidariser l'une avec l'autre les roues 15 et 16 en rotation autour de l'axe A1.

Le joint d'étanchéité 18 est formé d'une part par des léchettes 25 annulaires portées par la virole 22 et, d'autre part, par un élément abradable 26, ou pièce d'usure, relié au distributeur 17.

Lors du fonctionnement de la turbomachine 2, les roues mobiles 15 et 16 sont entraînées en rotation autour de l'axe A1, et les léchettes 25 tournent ainsi en regard de l'élément abradable 26. Le joint 18 assure ainsi une étanchéité qui réduit la circulation de gaz en dehors de la veine principale 11A, en l'occurrence radialement entre le distributeur 17 et la virole 22.

Le distributeur 17 comprend dans cet exemple plusieurs secteurs 30 disposés circonférentiellement bout à bout de manière à former ensemble une couronne aubagée.

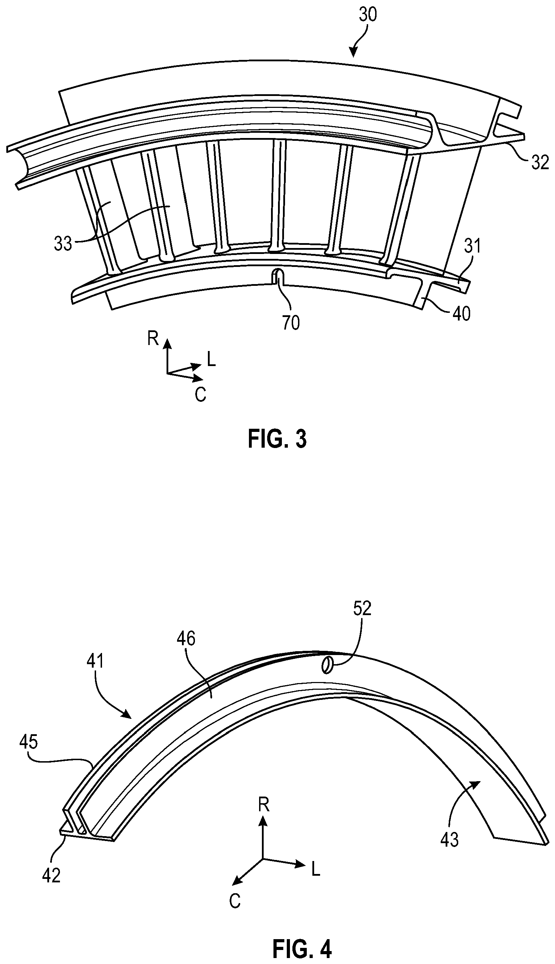

La figure 3 montre l'un de ces secteurs de couronne 30. Dans cet exemple, tous les secteurs de couronne 30 du distributeur 17 sont identiques de sorte que la description qui suit, qui se rapporte au secteur de couronne 30 de la figure 3, s'applique à chacun des autres secteurs de couronne.

En référence aux figures 2 et 3, le secteur de couronne 30 comprend une plateforme interne 31, une plateforme externe 32 et des pales 33.

Les pales 33 sont chacune reliée d'une part à la plateforme interne 31 et d'autre part à la plateforme externe 32 de manière à s'étendre radialement à travers la veine principale 11A, laquelle est radialement délimitée par ces plateformes 31 et 32.

Les pales 33 du secteur de couronne 30 sont circonférentiellement espacées les unes des autres. La plateforme externe 32 est configurée pour être fixée sur un carter 35 de la turbomachine 2.

Le secteur de couronne 30 comprend une bride 40 reliée à la plateforme interne 31 de manière à s'étendre radialement vers l'intérieur à partir de la plateforme interne 31, en direction de la virole 22.

La bride 40 est configurée pour coopérer avec un anneau d'étanchéité 41.

La figure 4 montre un tronçon circonférentiel de l'anneau 41, étant entendu que celui-ci forme une couronne annulaire.

L'anneau 41 est dans cet exemple une pièce portant l'élément abradable 26, lequel forme également une couronne annulaire.

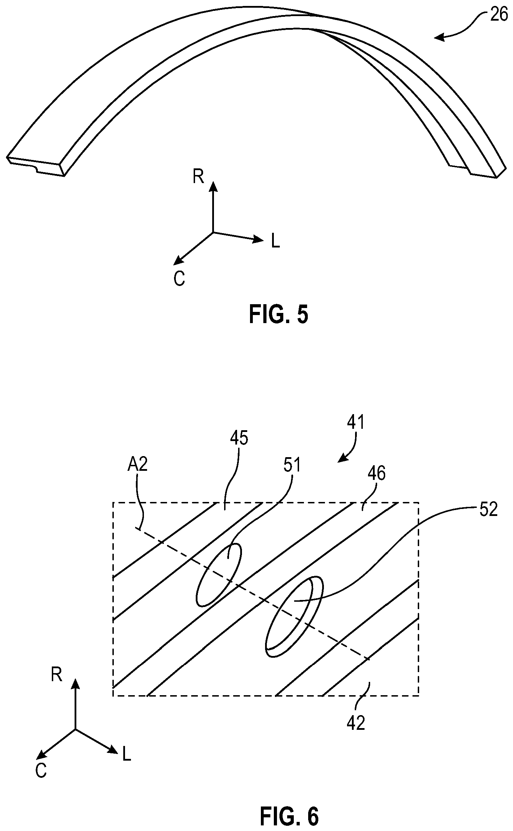

En référence aux figures 4 et 5, qui montrent respectivement un tronçon circonférentiel de l'anneau 41 et un tronçon circonférentiel correspondant de l'élément abradable 26, l'anneau 41 comprend à cet effet une plateforme 42 définissant une surface interne 43 sur laquelle est fixé l'élément abradable 26 selon la configuration de la figure 2.

L'anneau 41 comprend par ailleurs une bride annulaire amont 45 et un e bride annulaire aval 46 s'étendant radialement vers l'extérieur à partir de la plateforme 42.

En référence aux figures 2, 4, 6 et 8, les brides 45 et 46 sont sensiblement parallèles et axialement espacées l'une de l'autre de manière à former une section en U définissant un espace dans lequel peut être insérée la bride 40 de chacun des secteurs de couronne 30.

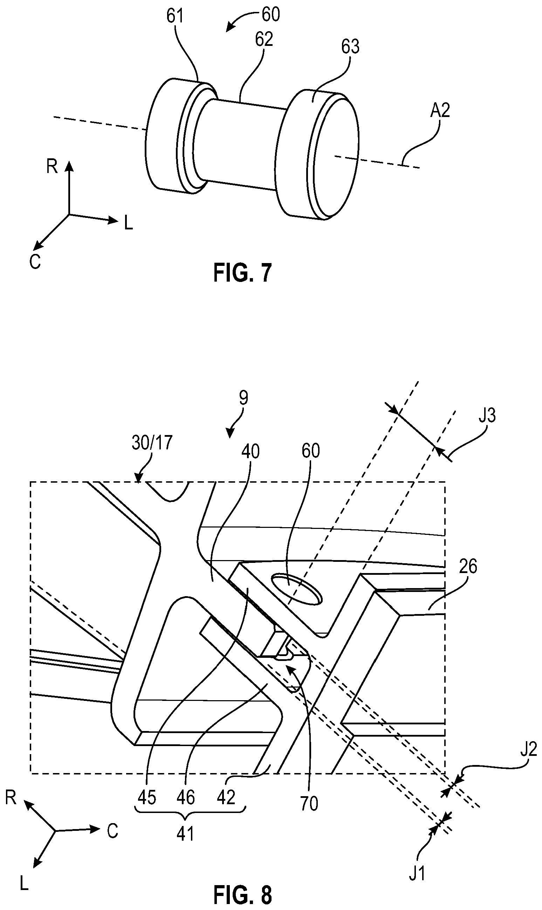

La distance axiale entre les brides 45 et 46 est choisie de manière à permettre un positionnement axial et un maintien en position axiale adéquats des secteurs de couronne 30, tout en autorisant sa mobilité par coulissement radial de la bride 40 entre les brides 45 et 46 (voir ci-dessous). En particulier, un jeu axial J1, J2 est laissé au montage entre les brides 40, 45, 46 pour autoriser ce déplacement radial (cf. figure 8). Le jeu J1 s'étend entre les brides 45 et 40, et le jeu J2 s'étend entre les brides 40 et 46.

Par ailleurs, la bride 40 est montée avec un jeu radial J3 par rapport au fond de l'espace défini par les brides 45, 46.

La figure 6 montre deux orifices 51 et 52 réalisés respectivement dans la bride amont 45 et la bride aval 46 de l'anneau 41.

Les orifices 51 et 52 présentent un axe A2 commun et sont prévus pour recevoir un pion 60 tel que celui représenté à la figure 7. Le pion 60 est une pièce cylindrique d'axe A2 présentant deux épaulements qui définissent une partie amont 61, une partie intermédiaire 62 et une partie aval 63.

La partie intermédiaire 62 a un diamètre inférieur au diamètre de la partie amont 61 et de la partie aval 63. Le diamètre de la partie amont 61 est en outre inférieur à celui de la partie aval 63.

L'orifice 51 de la bride amont 45 de l'anneau 41 est dimensionné pour recevoir la partie amont 61 du pion 60 de manière à former un ajustement serré. Similairement, l'orifice 52 de la bride aval 46 de l'anneau 41 est dimensionné pour recevoir la partie aval 63 du pion 60 de manière à former un ajustement serré.

Après assemblage, le pion 60 est ainsi porté par l'anneau 41 en formant avec celui-ci une liaison complète.

Le pion 60 est configuré pour coopérer avec le distributeur 17, en particulier avec la bride 40 du secteur de couronne 30.

En référence aux figures 3 et 8, la bride 40 de chacun des secteurs de couronne 30 comprend à cet effet une ouverture 70 qui présente une forme oblongue du type rainure s'étendant radialement.

Dans cet exemple, l'ouverture 70 débouche radialement vers l'intérieur du secteur de couronne 30.

L'ouverture 70 présente une largeur, ou dimension circonférentielle, lui permettant d'être traversée par la partie intermédiaire 62 du pion 60, c'est-à-dire une largeur supérieure au diamètre de la partie intermédiaire 62 du pion 60.

La largeur de l'ouverture 70 est par ailleurs inférieure au diamètre de la partie amont 61 et de la partie aval 63 du pion 60. Ainsi, en cas de rupture de la liaison entre le pion 60 et l'anneau 41, la bride 40 du secteur de couronne 30 forme une butée axiale de retenue du pion 60.

Par distinction avec le rotor de la turbine 9 dont les parties sont mobiles en rotation autour de l'axe A1, l'ensemble formé par l'anneau 41, l'élément abradable 26, le secteur de couronne 30 et le pion 60 appartiennent au stator de la turbine 9.

L'assemblage de cet élément statorique comprend une pré-insertion du pion 60 dans l'anneau 41 en faisant passer la partie amont 61 du pion 60 par l'orifice 52 de la bride aval 46.

Le pion 60 est ensuite fixé à l'anneau 41 par insertion forcée de sa partie amont 61 dans l'orifice 51 de la bride amont 45 et, simultanément, de sa partie aval 63 dans l'orifice 52 de la bride aval 46.

Le secteur de couronne 30 est ensuite déplacé radialement vers l'intérieur de manière à introduire la bride 40 axialement entre les brides 45 et 46 de l'anneau 41 et à insérer la partie intermédiaire 62 du pion 60 dans l'ouverture 70 de la bride 40.

Ces étapes d'assemblage permettent d'aboutir à la configuration illustrée aux figures 2 et 8.

Dans cette configuration, le pion 60 forme d'une part une butée circonférentielle pour le secteur de couronne 30, empêchant un déplacement de l'anneau 41 et du secteur de couronne 30 l'un par rapport à l'autre en rotation autour de l'axe A1 et permettant de centrer l'anneau 41 par rapport à cet axe A1.

D'autre part, compte tenu des dimensions respectives de la partie intermédiaire 62 du pion 60 et de l'ouverture oblongue 70, l'assemblage autorise un déplacement radial de l'anneau 41 par rapport au secteur de couronne 30.

L'ensemble statorique peut comprendre d'autres pions similaires au pion 60 coopérant chacun avec la bride 40 de l'un respectif des autres secteurs de couronne 30 selon les principes décrits ci-dessus.

Bien entendu, ces principes peuvent être généralisés. Par exemple, chacun des secteurs de couronne 30 du distributeur 17 peut coopérer avec plusieurs pions similaires au pion 60.

De manière générale, l'invention permet de relier l'un à l'autre l'anneau d'étanchéité 41 et le distributeur 17 selon une liaison définissant un degré de liberté radial apte à compenser les dilatations thermiques différentielles au sein de la turbine 9.

Le jeu radial entre les léchettes 25 et l'élément abradable 26 peut ainsi être maintenu sensiblement constant lors du fonctionnement du turboréacteur 2, ce qui améliore l'étanchéité conférée par le joint d'étanchéité 18.

Le montage forcé des pions 60 dans les orifices 51 et 52 de l'anneau 41 contribue à la réduction des fuites de gaz en-dehors de la veine principale 11A.

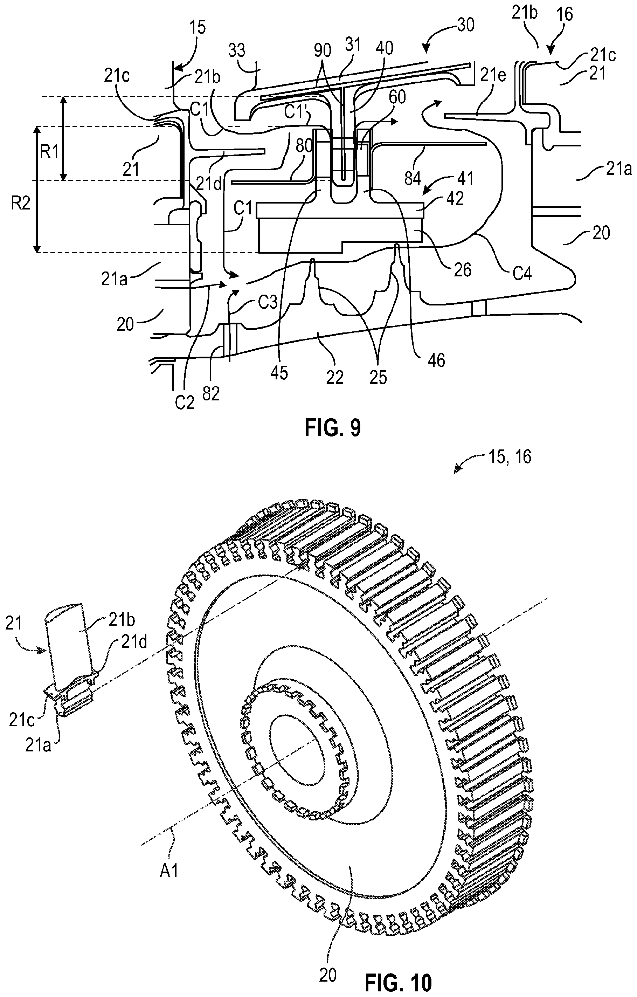

La figure 9 est une vue à plus grande échelle d'un anneau d'étanchéité 41 dans son environnement de montage.

Le secteur de couronne 30 représenté sur cette figure 9 comprend des rainures 90 réalisées dans la bride 40 et dans la plateforme 31. Ces rainures 90 sont configurées pour recevoir une première partie de plaquettes d'étanchéité, une deuxième partie de ces plaquettes étant logée dans des rainures 90 similaires réalisées dans un secteur de couronne 30 adjacent de sorte que les plaquettes d'étanchéité s'étendent circonférentiellement entre ces secteurs de couronne 30 et obturent l'espace circonférentiel qu'ils définissent entre eux. De telles plaquettes d'étanchéité peuvent être agencées selon ce principe de manière à s'étendre circonférentiellement entre chaque paire de secteurs de couronne adjacents et améliorer ainsi l'étanchéité de l'ensemble.

La figure 9 permet en outre de visualiser les circuits d'écoulement de flux de gaz.

Un premier circuit C1 représente une partie des gaz de la veine 11A qui passe radialement vers l'intérieur, entre la roue amont 15 et la plateforme 31 de chacun des secteurs de couronne 30. Ces gaz sont destinés à s'écouler radialement vers l'intérieur, entre la roue amont 15 et l'anneau d'étanchéité 41, jusqu'aux léchettes 25. Pour cela, un déflecteur 80 formé par une tôle peut être fixé sur l'anneau d'étanchéité 41 et en particulier sur sa bride amont, pour guider ces gaz afin qu'ils contournent l'élément abradable 26.

Cependant, en pratique, du fait de la présence du jeu de montage J1, J2, une partie de ces gaz (C1') passe à travers les brides 40, 45, 46 et arrive directement en aval des secteurs de distributeur, sans passer à travers le joint. Ces gaz sont alors réinjectés directement dans la veine 11A.

Un second circuit C2 représente de l'air de ventilation qui passe à travers des jeux de montage prévus entre les pieds 21a des aubes 21 et les alvéoles 20a du disque 20 de la roue amont 15 (cf. figure 10). Chacune des aubes comprend en effet un pied 21a qui est relié à la pale 21b de l'aube par une plateforme 21c. Cette plateforme 21c s'étend en amont de la plateforme 31 du secteur de distributeur 30 situé en aval et comprend un becquet aval 21d. Le becquet aval 21d s'étend axialement vers l'aval et son extrémité aval est intercalée radialement entre l'extrémité amont de la plateforme de chacun des secteurs de distributeur 30 et l'extrémité amont du déflecteur 80.

Le disque 20 de la roue 15 comprend à sa périphérie externe une série d'alvéoles 20a qui reçoivent chacune le pied 21a d'une aube 21. Les pieds 21a des aubes 21 sont emmanchés par engagement mâle-femelle dans les alvéoles 20a et des jeux persistent entre les pieds 21a et les parois des alvéoles 20a, en particulier entre l'extrémité radialement interne de chaque pied et le fond de l'alvéole correspondante. Ces jeux permettent le passage d'air de ventilation, axialement de l'amont vers l'aval de la roue, pour former le circuit C2.

Un troisième circuit C3 représente de l'air de ventilation qui passe à travers des orifices radiaux 82 traversants prévus dans la virole 22, en amont des léchettes 25.

Les différents gaz provenant des circuits C1, C2, C3 se rejoignent en amont des léchettes et sont destinés à alimenter le joint formé par les léchettes 25 et l'élément abradable 26. Ces gaz traversent axialement ce joint et se retrouvent en aval de l'anneau d'étanchéité (circuit C4).

Un déflecteur 84 formé par une tôle peut être fixé sur l'anneau d'étanchéité 41 et en particulier sur sa bride aval 46, pour guider ces gaz afin qu'ils rejoignent la veine 11A.

Comme c'est le cas de la roue amont 15, les aubes 21 de la roue aval 16 comprennent chacune un pied 21a qui est relié à la pale 21b de l'aube par une plateforme 21c. Cette plateforme 21c s'étend en aval de la plateforme 31 du secteur de distributeur 30 situé en amont et comprend un becquet amont 21e. Le becquet amont 21e s'étend axialement vers l'amont et son extrémité amont est intercalée radialement entre l'extrémité aval de la plateforme 31 de chacun des secteurs de distributeur 30 et l'extrémité aval du déflecteur 84.

La présente invention propose une solution pour éviter que le jeu de montage J1, J2 soit préjudiciable à la circulation des gaz dans cet environnement et impacte négativement le fonctionnement du joint et les performances de la turbomachine.

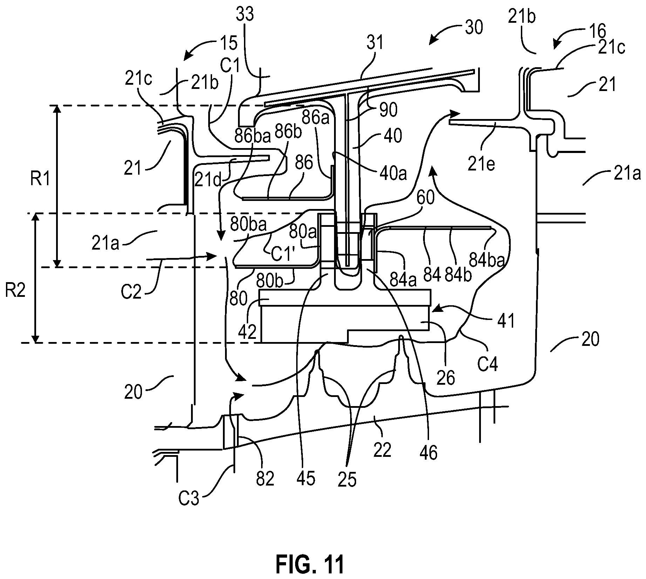

La figure 11 illustre un mode de réalisation préféré de l'invention.

Selon l'invention, chacun des secteurs de couronne 30 comporte un déflecteur 86 qui est porté par la bride interne 40 de ce secteur et s'étend autour de la bride amont 45 de l'anneau d'étanchéité 41.

Dans l'exemple représenté, le déflecteur 86 est fixé sur une face radiale amont 40a de la bride interne 40 de chacun des secteurs de couronne 30. Le déflecteur 86 peut y être fixé par soudage, brasage ou liaison mécanique (par vis ou rivets par exemple).

Comme c'est le cas des secteurs de couronne 30, les déflecteurs 86 portés par les secteurs de couronne ont ensemble une forme générale annulaire. Pris isolément, ils ont une forme générale incurvée ou en arc de cercle dont l'axe de révolution peut être considéré comme confondu avec l'axe A1 de la turbine.

Comme cela est visible dans le dessin, chaque déflecteur 86 a en section axiale une forme générale en L dont une première branche 86a est orientée radialement et s'étend parallèlement à la bride interne 40 de chacun des secteurs de couronne 30, et dont une seconde branche 86b est orientée axialement vers l'amont et s'étend autour de la bride amont 45 de l'anneau d'étanchéité 41 et d'au moins une partie amont de cet anneau d'étanchéité 41. Du fait de la forme incurvée du déflecteur 86, cette seconde branche 86b a une forme générale cylindrique ou en portion de cylindre.

Cette seconde branche 86b comprend de préférence une extrémité libre amont 86ba qui est située :
- en amont de l'anneau d'étanchéité 41, et/ou
- en amont de l'extrémité aval du becquet 21d, et/ou
- sensiblement au droit de l'extrémité amont de la plateforme 31 du secteur de couronne 30 correspondant.

Comme c'est le cas des deux autres déflecteurs 80 et 84 décrits dans ce qui précède, le déflecteur 86 peut être formé par une tôle. Les déflecteurs 80, 86 et leurs tôles peuvent être similaires ou identiques et en particulier orientés de la même façon, avec leurs branches radiales s'étendant vers le haut. Le déflecteur 84 peut être orienté dans une position différente avec sa branche radiale orientée vers l'intérieur. Les branches radiales 80a, 84a des déflecteurs 80, 84 sont fixées respectivement sur une face amont de la bride amont 45 et sur une face aval de la bride aval 46.

La branche axiale 80b du déflecteur 80 comprend de préférence une extrémité libre amont 80ba qui est située :
- en amont de l'anneau d'étanchéité 41, et/ou
- en amont de l'extrémité aval du becquet 21d, et/ou
- sensiblement au droit de l'extrémité amont de la plateforme 31 du secteur de couronne 30 correspondant, et/ou
- en amont ou au droit de l'extrémité 86ba du déflecteur 86.

La branche axiale 84b du déflecteur 84 comprend de préférence une extrémité libre aval 84ba qui est située :
- en aval de l'anneau d'étanchéité 41, et/ou
- en aval de l'extrémité amont du becquet 21e, et/ou
- en aval de l'extrémité aval de la plateforme 31 du secteur de couronne 30 correspondant.

En comparant les figures 9 et 11, on s'aperçoit que la bride interne 40 de chacun des secteurs de couronne 30 de la figure 11 a une dimension radiale R1 relativement importante et supérieure à une dimension radiale maximale R2 de l'anneau d'étanchéité 41 (ce qui n'est pas le cas dans la figure 9).

On constate à la figure 11 que la bride interne 40 de chacun des secteurs de couronne 30 est engagée entre les brides 45, 46 de l'anneau d'étanchéité 41 sur une distance radiale (égale à R1-R2) qui représente moins de 50% de la dimension radiale maximale R1 des secteurs de couronne 30.

Comme cela est visible à la figure 11, les gaz du premier circuit C1 sont déviés par le déflecteur 86 et se retrouvent en amont de l'anneau d'étanchéité 41. Du fait de la présence de ce déflecteur 86 additionnel et surtout de sa position, la température de l'air passant par le circuit C1' est diminuée par un effet de mélange avec l'air de refroidissement du circuit C2. La quasi-totalité des gaz du circuit C1 se retrouvent donc en amont des léchettes avec l'air de ventilation issu des circuits C2 et C3. Ces gaz traversent axialement le joint, se retrouvent en aval de l'anneau d'étanchéité (circuit C4), puis sont réinjectés dans la veine 11A.

Comme c'est le cas de la roue amont 15, les aubes 21 de la roue aval 16 comprennent chacune un pied 21a qui est relié à la pale 21b de l'aube par une plateforme 21c. Cette plateforme 21c s'étend en aval de la plateforme 31 du secteur de distributeur 30 situé en amont et comprend un becquet amont 21e. Le becquet amont 21e s'étend axialement vers l'amont et son extrémité amont est intercalée radialement entre l'extrémité aval de la plateforme 31 de chacun des secteurs de distributeur 30 et l'extrémité aval du déflecteur 84.

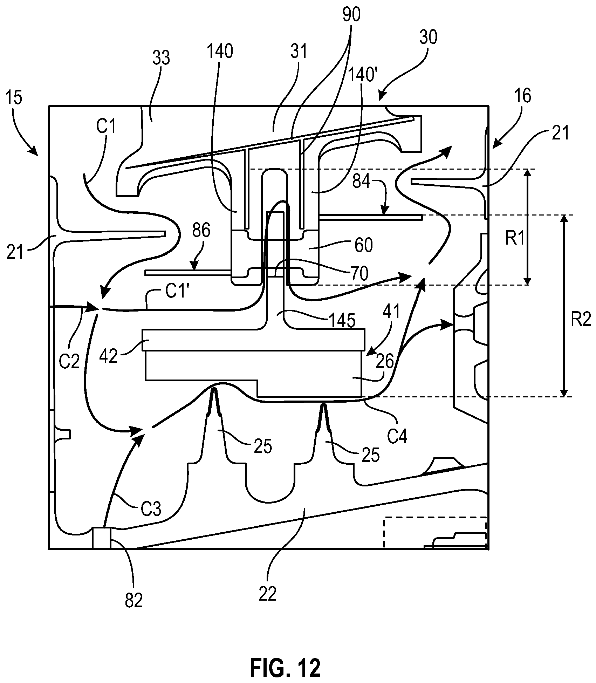

La figure 12 illustre une variante de réalisation de l'invention dans laquelle les moyens de coulissement sont inversés, c'est-à-dire que les deux brides amont et aval sont portées par chacun des secteurs de couronne 30 et la bride intercalée entre ces brides amont et aval est portée par l'anneau d'étanchéité.

Dans cette autre configuration donc, les moyens de coulissement comportent deux brides annulaires internes 140, 140', respectivement amont et aval, de chacun des secteurs de couronne 30, et une bride externe 145 de l'anneau d'étanchéité 41 qui est intercalée axialement entre les deux brides internes 104, 140'.

Dans cette variante, chacun des secteurs de couronne 30 comporte un déflecteur 86 qui est porté par la bride amont 140.

Dans l'exemple représenté, la bride amont 140 de chacun des secteurs de couronne 30 porte ledit déflecteur 86 à sa périphérie interne.

Un déflecteur 84 peut être fixé sur chacun des secteurs de couronne 30 et en particulier sur leurs brides aval 46. Ces déflecteurs 84 sont ici situés sur une circonférence dont le diamètre correspond sensiblement à celui de a périphérie externe de la bride externe 145 de l'anneau d'étanchéité.

Les moyens de coulissement comportent en outre des pions 60 portés par les brides amont et aval 140, 140' de chacun des secteurs de couronne 30 et traversant des ouvertures oblongues 70 formées dans la bride de l'anneau d'étanchéité 41. Le déflecteur 86 est situé radialement à l'intérieur de ces pions 60. Les brides 140, 140' de chacun des secteurs de couronne 30 ont une dimension radiale R1 qui est ici plus faible que la dimension radiale maximale R2 de l'anneau d'étanchéité 41.

La bride externe 145 de l'anneau d'étanchéité 41 est engagée entre les brides 140, 140' de chacun des secteurs de couronne 30 sur une distance radiale R1-R2 qui représente moins de 50% de la dimension radiale maximale R1 des secteurs de couronne 30.

Les gaz du premier circuit C1 sont déviés par le déflecteur 86 et se retrouvent en amont de l'anneau d'étanchéité 41. Du fait de la présence de ce déflecteur 86, la température de l'air passant par le circuit C1' est diminuée par un effet de mélange avec l'air de refroidissement du circuit C2.

La quasi-totalité des gaz du circuit C1 se retrouvent donc en amont des léchettes avec l'air de ventilation issu des circuits C2 et C3. Ces gaz traversent axialement le joint, se retrouvent en aval de l'anneau d'étanchéité (circuit C4), puis sont réinjectés dans la veine.

## Revendications

1. Ensemble statorique pour une turbomachine d'aéronef s'étendant autour d'un axe (A1) et comprenant :
- un anneau d'étanchéité (41) s'étendant autour de l'axe (A1) et comprenant un élément abradable (26) destiné à coopérer avec des léchettes d'étanchéité (25) portées par un rotor monté autour de l'axe (A1),
- une pluralité de secteurs de couronne (30) disposés circonférentiellement bout à bout autour de l'axe (A1) de sorte à former ensemble une couronne, chacun des secteurs de couronne (30) étant aubagé,
- des moyens de coulissement permettant un déplacement relatif radialement vis-à-vis de l'axe (A1) entre l'anneau d'étanchéité (41) et chacun des secteurs de couronne (30), les moyens de coulissement comportant :
+ selon une première configuration, deux brides annulaires radialement externes (45, 46), respectivement amont et aval, de l'anneau d'étanchéité (41), et une bride radialement interne (40) de chacun des secteurs de couronne (30) qui est intercalée axialement entre les deux brides annulaires radialement externes (45, 46), ou
+ selon une seconde configuration, deux brides annulaires radialement internes (140, 140'), respectivement amont et aval, de chacun des secteurs de couronne (30), et une bride radialement externe (145) de l'anneau d'étanchéité (41) qui est intercalée axialement entre les deux brides annulaires radialement internes (140, 140'),
**caractérisé en ce que** chacun des secteurs de couronne (30) comporte un déflecteur (86) qui est porté, selon la première configuration, par la bride radialement interne (40) de ce secteur et qui s'étend autour de la bride annulaire amont (45) de l'anneau d'étanchéité (41), et selon la seconde configuration, par la bride amont (140) de ce secteur.

2. Ensemble statorique selon la revendication 1, dans lequel le déflecteur (86), dans la première configuration, est fixé sur une face radiale amont (40a) de la bride radialement interne (40) de chacun des secteurs de couronne (30).

3. Ensemble statorique selon la revendication 1 ou 2, dans lequel le déflecteur (86), dans la première configuration, est fixé sur la bride radialement interne (40) de chacun des secteurs de couronne (30) par soudage, brasage ou rivetage.

4. Ensemble statorique selon l'une des revendications précédentes, dans lequel le déflecteur (86), dans la première configuration, a en section axiale une forme générale en L dont une première branche (86a) est orientée radialement et s'étend parallèlement à la bride radialement interne (40) de chacun des secteurs de couronne (30), et dont une seconde branche (86b) est orientée axialement vers l'amont et s'étend autour de la bride annulaire amont (45) de l'anneau d'étanchéité (41) et d'au moins une partie amont de cet anneau d'étanchéité (41).

5. Ensemble statorique selon la revendication précédente, dans lequel ladite seconde branche (86b) comprend une extrémité libre amont (86ba) qui est située en amont de l'anneau d'étanchéité (41).

6. Ensemble statorique selon l'une des revendications précédentes, dans lequel le déflecteur (86) est une première tôle.

7. Ensemble statorique selon la revendication précédente, dans lequel l'ensemble statorique comprend une deuxième tôle qui forme un autre déflecteur (80) et qui est portée, dans la première configuration, par la bride externe amont (45) de l'anneau d'étanchéité (41), et/ou une troisième tôle qui forme un autre déflecteur (84) et qui est portée par la bride annulaire aval (46) de l'anneau d'étanchéité (41).

8. Ensemble statorique selon la revendication précédente, dans lequel les moyens de coulissement comportent en outre des pions (60) portés par les brides annulaires amont et aval (45, 46) de l'anneau d'étanchéité (41) et traversant des ouvertures oblongues (70) formées dans la bride radialement interne (40) de chacun des secteurs de couronne (30).

9. Ensemble statorique selon l'une des revendications précédentes, dans lequel la bride radialement interne (40) de chacun des secteurs de couronne (30) a une dimension radiale (R1) supérieure à une dimension radiale maximale (R2) de l'anneau d'étanchéité (41).

10. Ensemble statorique selon l'une des revendications précédentes, dans lequel :
+dans la première configuration, la bride radialement interne (40) de chacun des secteurs de couronne (30) est engagée entre les brides annulaires amont et aval (45, 46) de l'anneau d'étanchéité (41) sur une distance radiale (R1-R2) qui représente moins de 50% de la/une dimension radiale maximale (R1) des secteurs de couronne (30), ou
+dans la seconde configuration, la bride radialement externe (145) de l'anneau d'étanchéité (41) est engagée entre les brides annulaires amont et aval (140, 140') de chacun des secteurs de couronne (30) sur une distance radiale (R1-R2) qui représente moins de 50% de la/une dimension radiale maximale (R1) des secteurs de couronne (30).

11. Ensemble statorique selon la revendication 1, dans lequel la bride annulaire amont (140) de chacun des secteurs de couronne (30), dans la seconde configuration, porte ledit déflecteur (86) à sa périphérie interne.

12. Ensemble statorique selon la revendication 11, dans lequel les moyens de coulissement comportent en outre des pions (60) portés par les brides annulaires amont et aval (140, 140') de chacun des secteurs de couronne (30) et traversant des ouvertures oblongues (70) formées dans la bride (145) de l'anneau d'étanchéité (41), ledit déflecteur (86) étant situé radialement à l'intérieur de ces pions (60).

13. Turbine (9) pour une turbomachine d'aéronef, cette turbine comprenant un carter (35) et un ensemble statorique selon l'une quelconque des revendications précédentes porté par le carter.

14. Turbine (9) selon la revendication précédente, comprenant en outre un rotor pourvu de léchettes annulaires (25) configurées pour coopérer avec l'élément abradable (26) de l'ensemble statorique, ce rotor comportant :
• une roue mobile (15) située en amont des secteurs de couronne (30) et comportant un disque (20) portant des aubes (21), lesdites aubes (21) comprennant des becquets aval (21d) qui s'étendent au moins en partie autour dudit déflecteur (86) ;
• un premier passage d'air de ventilation qui a une orientation axiale et qui est défini par des jeux entre des pieds (21a) des aubes (21) et le disque (20), et
• un second passage d'air de ventilation qui a une orientation radiale et qui est défini par des orifices radiaux (82) formés en amont desdites léchettes (25).

15. Turbine (9) selon la revendication 14, l'ensemble étant tel que défini à la revendication 7, dans laquelle les becquets aval (21d) s'étendent autour dudit déflecteur (86) qui s'étend lui-même autour de l'autre déflecteur (80) porté par la bride annulaire amont (45) de l'anneau d'étanchéité (41).

## Patentansprüche

1. Statoranordnung für ein Turbotriebwerk eines Luftfahrzeugs, die sich um eine Achse (A1) herum erstreckt und umfasst:
- einen Dichtungsring (41), der sich um die Achse (A1) herum erstreckt, und ein abreibbares Element (26) umfasst, das dazu bestimmt ist, mit Dichtungslippen (25) zusammenzuwirken, die von einem Rotor getragen werden, der um die Achse (A1) herum montiert ist,
- eine Vielzahl von Kranzsektoren (30), die am Umfang aneinandergefügt um die Achse (A1) herum angeordnet sind, um gemeinsam einen Kranz zu bilden, wobei jeder der Kranzsektoren (30) beschaufelt ist,
- Gleitmittel, die eine relative radiale Verschiebung gegenüber der Achse (A1) zwischen dem Dichtungsring (41) und jedem der Kranzsektoren (30) ermöglichen, wobei die Gleitmittel umfassen:
+ gemäß einer ersten Konfiguration zwei jeweils stromaufwärts und stromabwärts vom Dichtungsring (41) liegende radial äußere Ringflansche (45, 46), und einen radial inneren Flansch (40) eines jeden der Kranzsektoren (30), der axial zwischen den beiden radial äußeren Ringflanschen (45, 46) eingeschoben ist, oder
+ gemäß einer zweiten Konfiguration zwei jeweils stromaufwärts und stromabwärts eines jeden der Kranzsektoren (30) liegende radial innere Ringflansche (140, 140'), und einen radial äußeren Flansch (145) des Dichtungsrings (41), der axial zwischen den beiden radial inneren Ringflanschen (140, 140') eingeschoben ist,
**dadurch gekennzeichnet, dass** jeder der Kranzsektoren (30) einen Abweiser (86) umfasst, der gemäß der ersten Konfiguration von dem radial inneren Flansch (40) dieses Sektors getragen wird, und der sich um den stromaufwärts des Dichtungsrings (41) liegenden Ringflansch (45) erstreckt, und gemäß der zweiten Konfiguration von dem stromaufwärts liegenden Flansch (140) dieses Sektors.

2. Statoranordnung nach Anspruch 1, wobei der Abweiser (86) in der ersten Konfiguration auf einer stromaufwärts liegenden radialen Fläche (40a) des radial inneren Flansches (40) eines jeden der Kranzsektoren (30) befestigt ist.

3. Statoranordnung nach Anspruch 1 oder 2, wobei der Abweiser (86) in der ersten Konfiguration durch Schweißen, Löten oder Nieten auf dem radial inneren Flansch (40) eines jeden der Kranzsektoren (30) befestigt ist.

4. Statoranordnung nach einem der vorstehenden Ansprüche, wobei der Abweiser (86) in der ersten Konfiguration eine axiale Sektion einer allgemeinen L-Form aufweist, von dem ein erster Zweig (86a) radial ausgerichtet ist, und sich parallel zum radial inneren Flansch (40) eines jeden der Kranzsektoren (30) erstreckt, und von dem ein zweiter Zweig (86b) axial in stromaufwärts gerichteter Richtung ausgerichtet ist, und sich um den stromaufwärts liegenden Ringflansch (45) des Dichtungsrings (41) und mindestens einen stromaufwärts liegenden Teil dieses Dichtungsrings (41) erstreckt.

5. Statoranordnung nach dem vorstehenden Anspruch, wobei der zweite Zweig (86b) ein stromaufwärts liegendes freies Ende (86ba) umfasst, das sich stromaufwärts des Dichtungsringes (41) liegend befindet.

6. Statoranordnung nach einem der vorstehenden Ansprüche, wobei der Abweiser (86) ein erstes Blech ist.

7. Statoranordnung nach dem vorstehenden Anspruch, wobei die Statoranordnung ein zweites Blech umfasst, das einen anderen Abweiser (80) bildet, und das in der ersten Konfiguration von dem stromaufwärts liegenden Ringflansch (45) des Dichtungsrings (41) getragen wird, und/oder ein drittes Blech, das einen weiteren Abweiser (84) bildet, und das vom stromabwärts liegenden Ringflansch (46) des Dichtungsrings (41) getragen wird.

8. Statoranordnung nach dem vorstehenden Anspruch, wobei die Gleitmittel weiter Stifte (60) umfassen, die von den stromaufwärts und stromabwärts liegenden Ringflanschen (45, 46) des Dichtungsrings (41) getragen werden, und längliche Öffnungen (70) durchqueren, die im radial inneren Flansch (40) eines jeden der Kranzsektoren (30) gebildet sind.

9. Statoranordnung nach einem der vorstehenden Ansprüche, wobei der radial innere Flansch (40) eines jeden der Kranzsektoren (30) eine radiale Abmessung (R1) aufweist, die größer als eine maximale radiale Abmessung (R2) des Dichtungsringes (41) ist.

10. Statoranordnung nach einem der vorstehenden Ansprüche, wobei
+ in der ersten Konfiguration der radial innere Flansch (40) eines jeden der Kranzsektoren (30) zwischen den stromaufwärts und stromabwärts liegenden Ringflanschen (45, 46) des Dichtungsrings (41) auf einer radialen Distanz (R1-R2) in Eingriff steht, die weniger als 50% der/einer maximalen Abmessung (R1) der Kranzsektoren (30) darstellt, oder
+ in der zweiten Konfiguration der radial äußere Flansch (145) des Dichtungsrings (41) zwischen den stromaufwärts und stromabwärts liegenden Ringflanschen (140, 140') eines jeden der Kranzsektoren (30) auf einer radialen Distanz (R2-R1) in Eingriff steht, die weniger als 50% der/einer maximalen Abmessung (R1) der Kranzsektoren (30) darstellt.

11. Statoranordnung nach Anspruch 1, wobei der stromaufwärts liegende Ringflansch (140) eines jeden der Kranzsektoren (30) in der zweiten Konfiguration den Abweiser (86) auf seinem Innenumfang trägt.

12. Statoranordnung nach Anspruch 11, wobei die Gleitmittel weiter Stifte (60) umfassen, die von den stromaufwärts und stromabwärts liegenden Ringflanschen (140, 140') eines jeden der Kranzsektoren (30) getragen werden, und längliche Öffnungen (70) durchqueren, die im Flansch (145) des Dichtungsrings (41) gebildet sind, wobei sich der Abweiser (86) radial im Inneren dieser Stifte (60) befindet.

13. Turbine (9) für ein Turbotriebwerk eines Luftfahrzeugs, wobei diese Turbine ein Gehäuse (35) und eine Statoranordnung nach einem der vorstehenden Ansprüche umfasst, die von dem Gehäuse getragen wird.

14. Turbine (9) nach dem vorstehenden Anspruch, weiter einen Rotor umfassend, der mit Ringlippen (25) versehen ist, die konfiguriert sind, um mit dem abreibbaren Element (26) der Statoranordnung zusammenzuwirken, wobei dieser Rotor umfasst:
- ein bewegliches Rad (15), das sich stromaufwärts der Kranzsektoren (30) liegend befindet, und eine Scheibe (20) umfasst, die Schaufeln(21) trägt, wobei die Schaufeln (21) stromabwärts liegende Spoiler (21d) umfassen, die sich mindestens teilweise um den Abweiser (86) herum erstrecken;
- einen ersten Lüftungsluftdurchgang, der eine axiale Ausrichtung aufweist, und der durch Spiele zwischen Füßen (21a) der Schaufeln (21) und der Scheibe (20) definiert wird, und
- einen zweiten Lüftungsluftdurchgang, der eine radiale Ausrichtung aufweist, und der durch radiale Öffnungen (82) definiert ist, die stromaufwärts der Lippen (25) liegend gebildet sind.

15. Turbine (9) nach Anspruch 14, wobei die Anordnung wie in Anspruch 7 definiert ist, wobei sich die stromabwärts liegenden Spoiler (21d) um den Abweiser (86) herum erstrecken, der sich selbst um den weiteren Abweiser (80) herum erstreckt, der von dem stromaufwärts liegenden Ringflansch (45) des Dichtungsrings (41) getragen wird.

## Claims

1. A stator assembly for an aircraft turbomachine extending around an axis (A1) and comprising:
- a sealing annulus (41) extending around the axis (A1) and comprising an abradable element (26) designed to cooperate with sealing lips (25) carried by a rotor mounted around the axis (A1),
- a plurality of ring sectors (30) arranged circumferentially end to end around the axis (A1) so as to form a ring together, each ring sector (30) being bladed,
- sliding means allowing a relative movement radially with respect to the axis (A1) between the sealing annulus (41) and each of the ring sectors (30), the sliding means comprising:
∘ according to a first configuration, two external annular flanges (45, 46), upstream and downstream respectively, of the sealing annulus (41), and an internal flange (40) of each of the ring sectors (30) which is interposed axially between the two external flanges (45, 45), or
∘ according to a second configuration, two internal annular flanges (140, 140'), upstream and downstream respectively, of each of the ring sectors (30), and an external flange (145) of the sealing annulus (41) which is interposed axially between the two internal flanges (140, 140'),
**characterised in that** each of the ring sectors (30) comprises a deflector (86) which is carried, according to the first configuration, by the internal flange (40) of this sector and which extends around the upstream annular flange (45) of the sealing annulus (41), and according to the second configuration, by the upstream flange (140).

2. The assembly according to claim 1, wherein the deflector (86) is attached to an upstream radial face (40a) of the internal annular flange (40) of each of the ring sectors (30).

3. The assembly according to claim 1 or 2, wherein the deflector (86) is attached to the internal flange (40) of each of the ring sectors (30) by welding, brazing or riveting.

4. The assembly according to one of the preceding claims, wherein the deflector (86) has, in axial cross-section, a general L shape, a first branch (86a) of which is oriented radially and extends parallel to the internal flange (40) of each of the ring sectors (30), and a second branch (86b) of which is oriented axially upstream and extends around the upstream annular flange (45) of the sealing annulus (41) and at least an upstream portion of this sealing annulus (41).

5. The assembly according to the preceding claim, wherein said second branch (86b) comprises an upstream free end (86ba) which is located upstream of the sealing annulus (41).

6. The assembly according to one of the preceding claims, wherein the deflector (86) is a first sheet-metal.

7. The assembly according to the preceding claim, wherein it comprises a second sheet-metal which forms another deflector (80) and which is carried by the upstream external flange (45) of the sealing annulus (41), and/or a third sheet-metal which forms another deflector (84) and which is carried by the downstream external flange (46) of the sealing annulus (41).

8. The assembly according to the preceding claim, wherein the sliding means additionally comprise pins (60) carried by the upstream and downstream external flanges (45, 46) of the sealing annulus (41) and passing through oblong openings (70) formed in the flange (40) of each of the ring sectors (30).

9. The assembly according to one of the preceding claims, wherein the internal flange (40) of each of the ring sectors (30) has a radial dimension (R1) greater than a maximum radial dimension (R2) of the sealing annulus (41).

10. The assembly according to one of the preceding claims, wherein:
- the internal flange (40) of each of the ring sectors (30) is engaged between the flanges (45, 46) of the sealing annulus (41) over a radial distance (R1-R2) which represents less than 50% of the/a maximum radial dimension (R1) of the ring sectors (30), or
- the external flange (145) of the sealing annulus (41) is engaged between the flanges (140, 140') of each of the ring sectors (30) over a radial distance (R1-R2) which represents less than 50% of the/a maximum radial dimension (R1) of the ring sectors (30).

11. The assembly according to claim 1, wherein the upstream flange (140) of each of the ring sectors (30) carries said deflector (86) at its internal periphery.

12. The assembly according to claim 11, wherein the sliding means additionally comprise pins (60) carried by the upstream and downstream flanges (140, 140') of each of the ring sectors (30) and passing through oblong openings (70) formed in the flange (145) of the sealing annulus (41), said deflector (86) being situated radially inside these pins (60).

13. A turbine (9) for an aircraft turbomachine, this turbine comprising a casing (35) and a stator assembly according to any one of the preceding claims carried by the casing.

14. The turbine (9) according to the preceding claim, further comprising a rotor provided with annular lips (25) configured to cooperate with the abradable element (26) of the stator assembly, this rotor comprising:
• a movable wheel (15) located upstream of the ring sectors (30) and comprising a disc (20) carrying vanes (21), said vanes (21) comprising downstream spoilers (21d) which extend at least partly around said deflector (86);
• a first ventilation air passage which has an axial orientation and which is defined by clearances between roots (21a) of the vanes (21) and the disc (20); and
• a second ventilation air passage which has a radial orientation and which is defined by radial orifices (82) formed upstream of said lips (25).

15. The turbine (9) according to claim 14, the assembly being as defined in claim 7, wherein the downstream spoilers (21d) extend around said deflector (86) which itself extends around the other deflector (80) carried by the upstream external flange (45) of the seal annulus (41).
